Europäisches Patentamt

European Patent Office

Office européen des brevets

(11) Publication number: **0 266 586**
**A2**

# EUROPEAN PATENT APPLICATION

(21) Application number: 87114910.0

(22) Date of filing: 13.10.87

(51) Int. Cl.4: **G11B 27/00** , **G06F 13/00**

(30) Priority: 03.11.86 US 925953

(43) Date of publication of application:
**11.05.88 Bulletin 88/19**

(84) Designated Contracting States:
**DE FR GB IT**

(71) Applicant: **International Business Machines Corporation**
**Old Orchard Road**
**Armonk, N.Y. 10504(US)**

(72) Inventor: **Franaszek, Peter Anthony**
**Pine Tree Drive**
**Katonah New York 10536(US)**
Inventor: **Tantawi, Asser Nasreldin**
**31 Maple Hill Drive**
**Mahopac New York 10541(US)**

(74) Representative: **Herzog, F. Joachim, Dipl.-Ing**
**IBM Deutschland GmbH Schönaicher**
**Strasse 220**
**D-7030 Böblingen(DE)**

(54) **Decreasing response time to I/O request by duplicating data.**

(57) This invention relates to a method of reducing response time to I/O requests to access data stored in a plurality of circulating storages devices. More specifically, data is duplicated on the circulating storage devices. The access time of accessing an originally stored data unit and a duplicate of that data unit is estimated and the data unit requiring the lesser access time to be accessed is then accessed. This invention also describes the method of writing or storing data in the direct access storage device. More specifically, data is stored through the use of high priority queues and low priority queues. Requests to originally store data or the first copy of data is stored in a high priority queue, while the request for storing the copy of the originally stored data is stored in a low priority queue. Then, all requests in the high priority queue are satisfied, before any request in the low priority queue is satisfied.

FIG.1

## DECREASING RESPONSE TIME TO I/O REQUEST BY DUPLICATING DATA

This invention relates to a method of reducing response time to I/O (Input/Output) requests to access data stored in a plurality of circulating storage devices. More specifically, data is duplicated on circulated storage devices to reduce response time.

It is well established that information may be stored in a specific location on a storage medium and may be read out as desired. These storage media include, for example, magnetic recordings on drums, discs, or belts. The stored information may be read out by means of a transducer such as a magnetic head past which the storage medium is cyclically moved. It is also quite common that information may be requested for storage faster than the transducer can remove it from storage. This results in a plurality of requests building up at the input to the system. These requests are stored in what is known as a queue storage where they await entry to the system.

Often, when a request is presented, the information requested is located on a storage device at a maximum distance from the transducer, and the readout cannot occur until the storage device moves the information proximate to the transducer. A delay of this type reduces the efficiency of the system and may produce an even greater backlog of requests on the queue storage.

Several systems have been devised to eliminate this type of delay. For example, one such system provides a greater number of transducers at separate points about the storage device. Thus, information sought can be moved proximate to transducer in a shorter time. Systems of this type, however, require additional equipment such as heads, logic circuits, etc.

Another type of system designed to eliminate this delay is described in U. S. Patent 3,350,694 to Kusnick et al. Kusnick discloses a system wherein the requests for access to data are stored in a queue in the order in which the stored information will transverse the transducer. U. S. Patent 3,437,998 to Bennett et al. describes an apparatus for selecting from all stored requests for access to data, one which identifies a storage location about to become available for accessing. Both Kusnick's and Bennett's patents provide only a single copy of data with no multipathing from the CPU (Central Processing Unit) to the data storage devices.

It is, therefore, an object of this invention to reduce the response time to a request for access to data stored in a plurality of circulating storage devices.

This object is solved basically in advantageous manner by applying the features laid down in the independent claims. Accordingly, the present invention discloses a method of decreasing response time to a request for access to data stored in a plurality of storage devices in a direct access storage system. With this invention, a data unit of a number of data units is stored in at least two of a plurality of storage devices. The access time is estimated for accessing a selected data unit in each of the storage devices having the selected data unit stored therein. Finally, access is requested to the selected data unit in the storage device in which the access time for accessing the selected data unit is a minimum.

When this invention is applied to a queue request for access to data units, total response time is unexpectedly reduced by about 30% from about 30 msec to 20 msec.

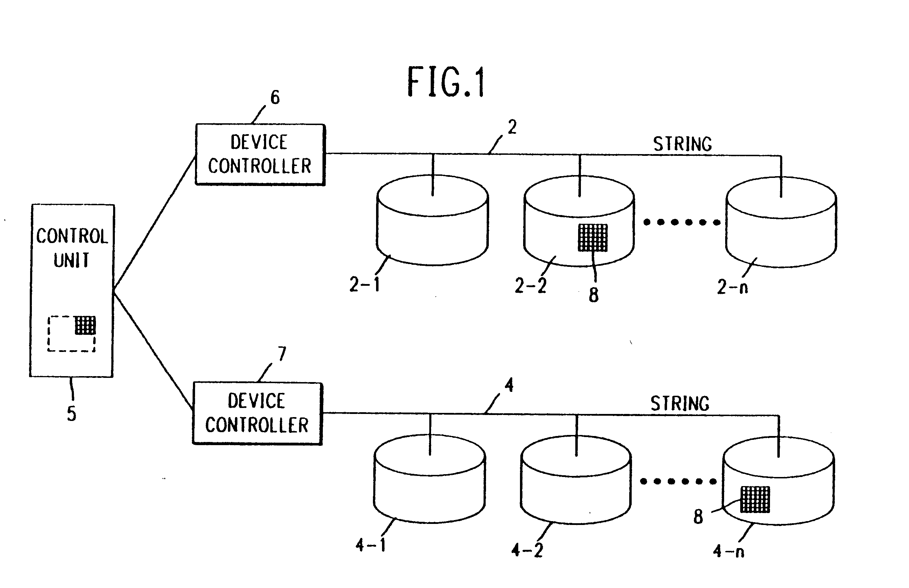

Referring now to the drawings, and more particularly to Fig. 1, there is shown a schematic of direct access storage system. Shown are circulating storage devices 2-1 through 2-n on string 2 and storage devices 4-1 through 4-n on string 4. Storage of data in these storage devices and access to data in these storage devices is controlled by control unit 5 through device controllers 6 and 7 on strings 2 and 4 respectively. Shown also in Fig. 1 is data unit 8 which is stored in two storage devices 2-2 and 4-n on different strings. An example of a control unit that could be used is an IBM 3880 Storage Control Unit. The device controller could be for example an IBM 3380 Model A4. The operation of the control unit 5 and the device controllers 6, 7 are well known in the art.

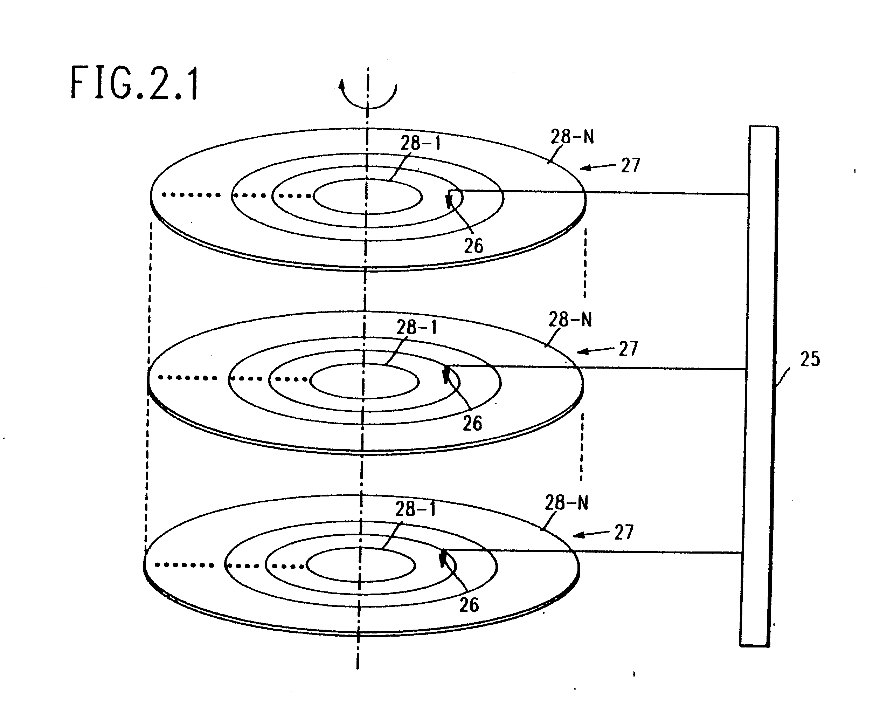

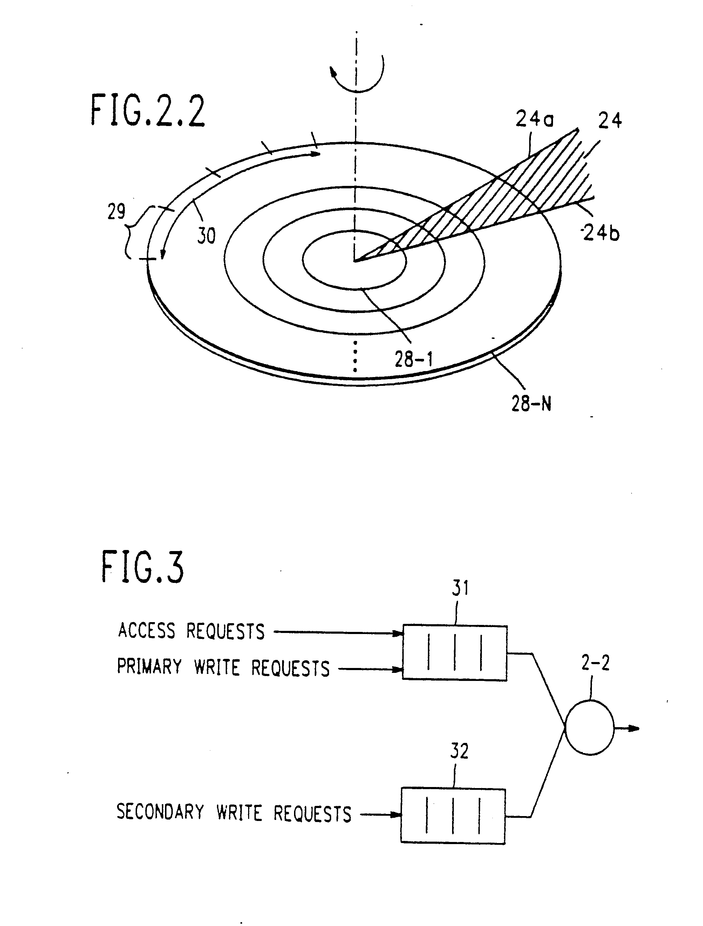

Fig. 2.1 is a more detailed schematic of the circulating storage devices shown in Fig. 1. Shown are a plurality of disks 27 in horizontal planes. On each disk there are a number of tracks 28-1 through 28-N. Magnetic sensing units 26 which extend from arm 25 are used to read and write the data on the various tracks. Arm 25 will move to the left and right to position the sensing units 26 over the proper tracks. All the disks 27 on a given storage device, circulate as a unit at a constant speed.

Fig. 2.2 is a schematic illustration of a top view of a disk. Shown are concentric tracks 28-1 through 28-N. The smallest quantity of data, in this embodiment, that is read out of or written into the storage device is a block 29. The data unit on the other hand can be anything from a bit to a number of blocks. The shaded area between the lines 24a and 24b is known as a sector. In this embodiment, the sectors are numbered 1 through M, and this sector number denotes the angular position on the disk of the storage device. To read data, or otherwise access data, on a given disk, a certain seek and latency time is required. The seek time is the time necessary for the sensing device 26 to move from a track on which it is currently located to a latter track on which data is to be accessed, easily obtained from device characteristic, as both origin and destination tracks are known. The latency time is the time necessary for the disk to rotate from a current sector to a latter sector where data is to be accessed, so that the latter sector of the disk is underneath the sensing device. The latency time for a given request may be obtained by comparing the position of the disk (determined as described below) with the known position of the data.

Thus, for example, each of the tracks on a given disk 27 can be divided up into, say 256 sectors, and a sector number such as n will be used to identify the angular position of information on any of these tracks. In addition to the angular position, one must also know the track on which to access or store data. The storage device can also be divided into a number of partitions (see 30 of Fig. 2.2), each of which may contain anything from a block to several tracks. Partition 30 of Fig. 2.2, for example, contains four blocks.

Referring now to Fig. 3, each storage device has an associated high priority queue 31 and an associated low priority queue 32. Storage device 2-2 is shown only as an example. Any of the storage devices shown in Fig. 1 could have been used. The low priority queue 32 is used to store what is know as secondary write requests, while the high priority queue is used to store access requests or to store what is known as primary write requests. A read request is merely a request to read data at a particular location on an associated storage device. A primary write request is a request to originally store data on an associated storage device, while a secondary write request is just a request to store a copy of that data in another storage device. The term "originally stored" or "originally stored data" is merely used for reference purposes to distinguish it from a copy of that data that is being stored. Actually, however, duplicate data is being stored at two different storage locations. Thus, we can speak of a request to "originally store data" according to some primary write request, while a "copy of that originally stored data" is stored according to some secondary write requests.

In this application, the term "write" will be used synonymously with the term "store".

The execution time of a request from a central processing unit to read or write data in a storage device is referred to as response time. This includes queueing time in addition to service time. The components of the service time of a request are (1) seek, (2) latency, (3) rotational position sensing miss delay, and (4) transfer. These four components are well known in the art. A request is said to be serviced when data was transferred to or from the storage device in accordance with the request. That is, data stored or read in accordance with the request.

Data is said to be accessed when the transducer is proximate to the data so that the data can be read. Accessing also means that the transducer is proximate to a location on the disk so that data can be written at that location. The time, that elapses between the generation of a request and the accessing of data or a location on a disk, is referred to as access time. Thus, access time consists of (1) queueing time, (2) seek and (3) latency. Queueing time is the time to satisfy previous unserviced requests.

In this application satisfying a request means that data has been written into the storage device in the case of and in accordance with a write request, or that data has been transferred from the storage device in the case of and in accordance with a read request.

In the operation of the invention to reduce response time, data is duplicated on at least two storage devices, preferably not on the same string. At a later time when there is a request to access a particular data unit that has been previously stored, one of the storage devices that contains the data unit will be accessed. The data unit in the storage device which provides the minimum estimated access time will be accessed. This estimate is the sum of the estimates for the aforementioned three components: (1) queueing time, (2) seek and (3) latency.

In this embodiment, when there is a request to store a data unit, two requests to store that same data unit are generated by the central processing unit. Such requests will specify storage in a different storage device than the other request. The access time for each of the two requests will be estimated as described below. The request requiring the lesser estimated access time is known as the primary write request, and this request will be stored in a high priority queue of an associated storage device that is specified by the primary write request. The request requiring a greater access time is known as the secondary write request, and this request is stored in a low priority queue associated with the storage device that is requested by the secondary write request. Thus, for any given storage device requests in the associated high priority queue is serviced before any request in the associated low priority queue. Thus, for any given storage device primary write requests and read requests will be satisfied before any secondary write request is satisfied. Thus for any given storage device read requests will not be delayed on account of duplicating storage.

Data duplication is preferred to be on different strings so that primary and secondary write requests do not compete for the same device controller.

In the above paragraph, satisfaction of a primary write request will be referred to as "originally storing data", while satisfaction of a secondary write request will be referred to as storing a "copy of that originally stored data".

As far as the storage of duplicated data is concerned, we differentiate between two storage - schemes: (1) Mirrored devices and (2) Non-Mirrored devices. In the first scheme, data on one device is entirely duplicated on another device. These two devices are called paired since they contain the same data. Alternatively, one could divide the data on one device into a number of partitions and store the duplicate of these partitions such that each duplicate partition is stored on a different device. We refer to this storage scheme as non-mirrored.

Devices are subject to failure at a rate of about three to four times per year. In the case of a device failure, the recovery process consists of: (1) replacing the failed device by a new one, (2) restoring the data which was stored on the failed device prior to failure, and (3) updating the contents of the new device to reflect all updates which took place during the data restoration period. The length of the total recovery time is a very important factor in system design. A long recovery time causes the performance of the entire system to be degraded for a long period of time.

Consider a case of a device failure in both a mirrored and a non-mirrored environment. In a mirrored environment, data is restored by reading the contents of the mirrored device of the failed device and copying it on to the new device. This process results in traffic contention at the mirrored device since all the copying requests as well as read and write requests during recovery are served by a single resource. On the other hand, copying in a non-mirrored environment could be done in parallel since the data to be restored is stored on physically different devices. Hence, the load of copying is distributed among more than one resource. In addition, read traffic during recovery could be redirected in order to balance the load on devices and thus improve performance.

Therefore, we suggest storing duplicated data on non-mirrored devices so that the recovery time is minimized. By analyzing a direct access storage system with two strings of 8 3380 devices, we found that, if devices are mirrored, the recovery time is approximately 40 minutes when the channel is utilized 30% of the time. In a non-mirrored environment and with two-way recovery, i.e. data on a device is divided into two partitions, the recovery times goes down to approximately 15 minutes. This time amounts to a decrease of about 60% in the recovery time when compared to the mirrored case. We have also found that the recovery time may be decreased even further by having more than two partitions.

Information about the seek time is available to the queue manager since each request specifies the arm position that it needs. Accordingly, the manager knows exactly the arm position, and hence the seek time, of the device and can use that information to schedule requests to minimize the seek time component of service. The queue manager can be part of the central processing unit or control unit 5.

Here, we are concerned with providing information about the latency time for service, namely the angular position of the device, to the queue manager. Since the maximum rotational delay (latency time) equals the device rotation time, i.e., 16.7 msec, in currently available DASDs, it constitutes a major component of the service time. Therefore, response time to an overall service request is effectively reduced by using seek time as one of the parameters (latency time being another parameter) for queueing control and for determining which data unit of a plurality of identical data units to access. Therefore, using the angular position as a queueing control parameter is expected to decrease response time and hence improve the overall performance of the direct access storage system. One way of determining the angular position of a device is through the addition of hardware components that will either synchronize devices on a string or monitor rotation via a sensing and feedback mechanism. This approach results in a more complex and expensive system. Our invention yields an estimate of the angular position without having to add any hardware components.

Let us consider a queue of access requests. After a storage location is accessed, data is then stored or read. In particular, consider a request with specified sector number n, n = 0,1..., M - 1, where M is the number of sectors per track. Let t be the completion time, i.e. channel connect time, for that request. Then, it is clear that the device is positioned at sector n at time t. The tuple (t,n) provides information about the angular position of the device at any time T. More specifically, the sector number a time T is given by the simple expression,

$$[n + (T - t) \frac{M}{X}] \bmod M$$

where x is the device rotation time. The queue manager needs only to store the most recent tuple (t,n) and uses the clock time T to determine the angular position at that time.

This simple mechanism has several advantages: (1) it does not require extra sensing or synchronization hardware components, (2) it is easily implementable in existing operating systems, and (3) it allows multiple queue managers to the same device to figure out the angular position without the need of communication or broadcasting.

The queueing time at a particular storage device is estimated by adding the remaining service time of the request being serviced by that device to the sum of the service times of all the requests waiting in a high priority queue associated with that device. This is achieved by keeping for each storage device a tuple (t,w) where w is the total amount of service required from the device at time t. The tuple (t,w) provides information about the queueing time of a request joining the high priority queue associated with the device. The value of w decreases linearly with t, until it reaches zero when the storage device becomes idle. The value of (t,w) is updated every time (1) a new request joins the high priority queue and (2) an RPS miss occurs. In the first case, the amount of service required by the new request is added to ,w. In the second case, an additional rotation time is added to w.

## Claims

1. In a direct access storage system with a plurality of circulating storage devices, a method of decreasing response time to a request to read data stored in the storage devices, comprising the steps of:

(a) storing each data unit of a number of data units in each of at least two of the storage devices;

(b) estimating the access time for accessing a selected data unit of the data units stored in step (a) in each of the storage devices having the selected data unit stored therein; and

(c) accessing the selected data unit in the storage device in which the access time is estimated to be a minimum so that the selected data unit can be read.

2. A method as recited in claim 1, wherein each data unit is stored in two of the plurality of storage devices.

3. A method as recited in claim 1, wherein each storage device is partitioned into a number of partitions, wherein the partitions of data units originally stored are duplicated on a different storage device with no two partitions of originally stored data units being duplicated on the same storage device.

4. A method as recited in claim 1, wherein the data units on any one of the storage devices are duplicated entirely on another single respective storage device.

5. A method as recited in claim 1, wherein the latency time is determined by measuring the angular position of a corresponding storage device at time t and using the following formula, which yields the angular position of the corresponding storage device at time T:

$$[\, n + (T - t)\, \frac{M}{X}\, ]\bmod M$$

where x is the rotation time, n is the angular position of the mechanism at time t, and M is the number of sectors per track.

6. A method as recited in claim 1, wherein each request to store data comprises a primary write request and a secondary write request, the primary request being a request to originally store data on a first storage device and the secondary write request being a request to store a copy of the originally stored data on a second storage device which is different than the first storage device, with the first and second storage devices being part of the plurality of storage devices, the secondary write request being placed in a low priority queue containing requests which are satisfied only if there are no requests in a respective higher priority queue.

7. In a direct access storage system with a plurality of circulating storage devices, each device having an associated high and low priority queue, a method of decreasing response time for storing or reading data, comprising the steps of:

(a) estimating access time for satisfying each request of a plurality of requests, the requests being either to store or read data;

(b) storing first requests (of said plurality of requests) to store data in respective high priority queues and second requests (of said plurality of requests) in respective low priority queues, each second request (of the second requests) being a request to store the same data as requested for storage by a corresponding first request (of the first requests), with each first request estimated to require less access time than a corresponding second request;

(c) storing requests (of said plurality of requests) to access data, in respective queues of the associated high priority queues; and

(d) servicing the requests stored in the low and high priority queues, wherein for each storage device, the requests in an associated high priority queue are serviced before the requests in an associated low priority queue.

FIG.1

IBM — YO 985 097

FIG.2.1

28-1

28-N

27

26

28-1

28-N

27

26

28-1

28-N

27

26

25

0 266 586

# FIG.2.2

24a    24

29

30

24b

28-1

28-N

# FIG.3

ACCESS REQUESTS ⟶

PRIMARY WRITE REQUESTS ⟶

31

2-2

32

SECONDARY WRITE REQUESTS ⟶